# EUROPEAN PATENT SPECIFICATION

(11) **EP 3 188 461 B1**
(45) Date of publication and mention of the grant of the patent: **18.07.2018**
(21) Application number: 14902411.9
(22) Date of filing: 26.09.2014
(51) Int. Cl.: G01S 15/08, G01S 17/08, G01S 7/52, G01S 7/497, H04M 1/725

(54) **METHOD AND APPARATUS FOR CORRECTING DETECTION DISTANCE**
VERFAHREN UND EINRICHTUNG ZUR KORREKTUR EINES DETEKTIONSABSTANDES
PROCÉDÉ ET APPAREIL DE CORRECTION DE DISTANCE DE DÉTECTION

(43) Date of publication of application: 05.07.2017
(73) Proprietor: Huawei Technologies Co. Ltd., Shenzhen, Guangdong 518129 (CN)
(72) Inventor: ZHANG, Deliang, Shenzhen Guangdong 518129 (CN)
(74) Representative: Gill Jennings & Every LLP
(86) International application number: PCT/CN2014/087569
(87) International publication number: WO 2016/045095

(56) References cited:
- EP-A2- 1 220 457
- EP-A2- 2 713 586
- CN-A- 102 520 852
- CN-A- 102 833 419
- CN-A- 102 917 124
- CN-A- 103 442 136
- CN-A- 103 837 910

## Description

### TECHNICAL FIELD

The present invention relates to the field of communications technologies, and in particular, to a detection distance calibration method, apparatus, and device.

### BACKGROUND

With further customized development of user terminal products, the terminal products have increasingly diverse functions. For example, distance detection may be performed by using an infrared sensing technology, and when a distance between an external object and a terminal device falls within a specified range, functions such as disabling screen display and shielding touchscreen sensing are performed according to a detection result.

When the terminal device performs the foregoing functions by using the infrared sensing technology, a calibration threshold is usually set, to calibrate a detection distance, and the calibration threshold is used to determine a calibration range of the detection distance. In specific implementation, the following manner is generally used: A detection signal is transmitted, and the detection signal is reflected back to the terminal device when encountering an external object; and the terminal device may determine a distance between the external object and the terminal device according to a collected detection signal, compare the determined distance between the external object and the terminal device with the specified calibration threshold, and perform a corresponding function according to a result of the comparing. For example, a strength value of the detection signal can reflect a length of the detection distance, and a larger strength value of the detection signal indicates a shorter detection distance. To implement the functions such as disabling screen display and shielding touchscreen sensing when the distance between the external object and the terminal device falls within the specified range, if the strength value of the collected detection signal exceeds the specified calibration threshold, the functions such as disabling screen display and shielding touchscreen sensing may be performed.

The foregoing calibration threshold used to determine the calibration range of the detection distance is a fixed parameter value. However, an external environment in which the terminal device is located often changes, and therefore, the specified fixed calibration threshold cannot adapt to an external environment change and cannot be adaptively adjusted. For example, the terminal device is placed at a fixed location, and if an obstacle is right located within an effective detection distance in this case, that is, the detection distance determined by the terminal device according to the collected detection signal always falls within an effective detection distance range, the terminal device keeps calibrating the detection distance. For example, trigger signals are continuously transmitted so that the terminal device performs a corresponding function operation, and consequently, a mistaken trigger phenomenon occurs, which affects accuracy of calibrating a detection distance by the terminal device. EP 2713586 A2, EP 1220457 A2, and CN 103442136 A describe approaches to adjusting devices based on proximity.

### SUMMARY

Embodiments of the present invention provide a detection distance calibration method, apparatus, and device, so as to improve accuracy of calibrating a detection distance by a terminal device.

According to a first aspect, a detection distance calibration method is provided, including:
collecting at least one detection signal;
determining a strength value of the at least one detection signal, where the strength value of the detection signal reflects a length of a detection distance;
determining a reference strength value of the detection signal according to the strength value of the at least one detection signal;
determining a calibration threshold according to the reference strength value. The calibration threshold is used to determine a calibration range of the detection distance; and
calibrating the detection distance according to the calibration threshold and a strength value of a subsequently collected detection signal;
wherein the determining a calibration threshold according to the reference strength value specifically comprises:
   determining whether the reference strength value exceeds a preset maximum reference strength value; and
   using a preset default value as the calibration threshold if the reference strength value exceeds the preset maximum reference strength value, wherein the default value is a reference value determined according to at least one collected stable detection signal; or using a sum of the reference strength value and a fixed parameter value as the calibration threshold if the reference strength value does not exceed the preset maximum reference strength value.

With reference to the first aspect, in a first implementation manner, the determining a reference strength value of the detection signal according to the strength value of the at least one detection signal specifically includes:
using an average strength value of the collected detection signal as the reference strength value of the detection signal.

With reference to the first aspect or the first implementation manner of the first aspect, in a second implementation manner, before the determining a reference strength value of the detection signal according to the strength value of the at least one detection signal, the method further includes:
determining that a strength value of each collected detection signal falls within a preset standard range.

With reference to the second implementation manner of the first aspect, in a third implementation manner, the determining that a strength value of each collected detection signal falls within a preset standard range specifically includes:
determining a maximum strength value of the detection signal and a minimum strength value of the detection signal according to the strength value of the at least one collected detection signal; and
if a difference between the maximum strength value of the detection signal and the minimum strength value of the detection signal does not exceed a preset standard value, determining that the strength value of each collected detection signal falls within the preset standard range.

With reference to the first aspect or the first implementation manner of the first aspect, in a fourth implementation manner, before the determining a reference strength value of the detection signal according to the strength value of the at least one detection signal, the method further includes:
adding together a quantity of collection times when a detection signal whose strength value does not fall within a preset standard range exists in the at least one detection signal;
determining whether a total quantity of collection times that is obtained after the quantity of collection times is added exceeds a specified quantity of times; and
if the total quantity of collection times that is obtained after the quantity of collection times is added is less than the specified quantity of times, performing again the collecting at least one detection signal; or if the total quantity of collection times that is obtained after the quantity of collection times is added is not less than the specified quantity of times, performing the determining a reference strength value of the detection signal according to the strength value of the at least one detection signal.

With reference to any one of the foregoing implementation manners of the first aspect, in a fifth implementation manner, after the determining the calibration threshold, the method further includes:
if a difference between the strength value of the subsequently collected detection signal and the reference strength value is not less than the preset standard value, performing again the collecting at least one detection signal, the determining a strength value, the determining a reference strength value, the determining a reference strength value, and determining a calibration threshold.

With reference to any one of the foregoing implementation manners of the first aspect, in a sixth implementation manner, the detection signal includes an infrared signal.

According to a second aspect, a detection distance calibration apparatus is provided, including:
a collection unit, configured to collect at least one detection signal;
a first determining unit, configured to determine a strength value of the at least one detection signal collected by the collection unit, where the strength value of the detection signal reflects a length of a detection distance;
a second determining unit, configured to: determine a reference strength value of the detection signal according to the strength value that is of the at least one detection signal and is determined by the first determining unit; and determine a calibration threshold according to the reference strength value. The calibration threshold is used to determine a calibration range of the detection distance; and
a calibration unit, configured to calibrate the detection distance according to the calibration threshold determined by the second determining unit and a strength value of a subsequently collected detection signal;
wherein the apparatus further comprises a judging unit, wherein
   the judging unit is configured to determine whether the reference strength value exceeds a preset maximum reference strength value; and
   the second determining unit is specifically configured to determine the calibration threshold according to the reference strength value in the following manner:
      using a preset default value as the calibration threshold if a result of the determining of the judging unit is that the reference strength value exceeds the preset maximum reference strength value, wherein the default value is a reference value determined according to at least one collected stable detection signal; or using a sum of the reference strength value and a fixed parameter value as the calibration threshold if a result of the determining of the judging unit is that the reference strength value does not exceed the preset maximum reference strength value.

With reference to the second aspect, in a first implementation manner, the second determining unit is specifically configured to determine the reference strength value of the detection signal according to the strength value of the at least one detection signal in the following manner:
using an average strength value of the collected detection signal as the reference strength value of the detection signal.

With reference to the second aspect or the first implementation manner of the second aspect, in a second implementation manner, the second determining unit is further configured to:
before determining the reference strength value of the detection signal according to the strength value of the at least one detection signal, determine that a strength value of each collected detection signal falls within a preset standard range.

With reference to the second implementation manner of the second aspect, in a third implementation manner, the second determining unit is specifically configured to determine, in the following manner, that the strength value of each collected detection signal falls within the preset standard range:
determining a maximum strength value of the detection signal and a minimum strength value of the detection signal according to the strength value of the at least one collected detection signal; and
if a difference between the maximum strength value of the detection signal and the minimum strength value of the detection signal does not exceed a preset standard value, determining that the strength value of each collected detection signal falls within the preset standard range.

With reference to the second aspect or the first implementation manner of the second aspect, in a fourth implementation manner, the collection unit is further configured to:
before the reference strength value of the detection signal is determined according to the strength value of the at least one detection signal, add together a quantity of collection times when a detection signal whose strength value does not fall within a preset standard range exists in the at least one detection signal;
the apparatus includes the judging unit, where
the judging unit is configured to determine whether a total quantity of collection times that is obtained after the quantity of collection times is added exceeds a specified quantity of times; and
the collection unit is further configured to:
   if a result of the determining of the judging unit is that the total quantity of collection times that is obtained after the quantity of collection times is added is less than the specified quantity of times, perform again the collecting at least one detection signal; or
the second determining unit is further configured to:
   if a result of the determining of the judging unit is that the total quantity of collection times that is obtained after the quantity of collection times is added is not less than the specified quantity of times, perform the determining a reference strength value of the detection signal according to the strength value of the at least one detection signal.

According to the detection distance calibration method and apparatus provided in the embodiments of the present invention, a detection signal is collected; a strength value of the detection signal is determined, where the strength value of the detection signal can reflect a length of a detection distance of an external object; a reference strength value is determined according to the strength value of the collected detection signal; and a calibration threshold is determined according to the determined reference strength value, so that the determined calibration threshold adapts to an external environment in which a terminal device is located. Therefore, the calibration threshold in the embodiments of the present invention can adapt to an environment change to be adaptively adjusted, which improves accuracy of calibrating a detection distance by the terminal device.

### BRIEF DESCRIPTION OF DRAWINGS

FIG. 1A is a flowchart of a detection distance calibration method according to an embodiment of the present invention;
FIG. 1B is a flowchart of a method for determining a reference strength value according to an embodiment of the present invention;
FIG. 1C is a flowchart of a method for determining an average strength value of detection signals according to an embodiment of the present invention;
FIG. 1D is a flowchart of a method for determining whether a strength value of a detection signal falls within a preset standard range according to an embodiment of the present invention;
FIG. 1E is a flowchart of a method for determining a calibration threshold according to an embodiment of the present invention;
FIG. 2A and FIG. 2B are a flowchart of a detection distance calibration method according to another embodiment of the present invention;
FIG. 3A is a schematic structural diagram of a detection distance calibration apparatus according to an embodiment of the present invention;
FIG. 3B is a schematic structural diagram of a detection distance calibration apparatus according to another embodiment of the present invention; and
FIG. 4 is a schematic structural diagram of a detection distance calibration device according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

A detection distance calibration method provided in the embodiments of the present invention may be applied to a method in which a terminal device calibrates a detection distance and performs a corresponding processing function according to the calibrated detection distance. In a detection distance calibration process in the embodiments of the present invention, a detection signal is collected, and a calibration threshold is determined according to the actually collected detection signal. Therefore, the calibration threshold in the embodiments of the present invention adapts to an external environment in which the terminal device is located, that is, the determined calibration threshold can adapt to an environment change to be adaptively adjusted.

The collected detection signal in the embodiments of the present invention is a signal that can be used for distance detection. The collected detection signal in the embodiments of the present invention is associated with a detection signal transmitted by the terminal device. For example, if an infrared transmitting component is disposed in the terminal device, and the transmitted detection signal is an infrared signal, the collected detection signal is an infrared signal reflected by an external object. If an ultrasonic transmitting component is disposed in the terminal device, and the transmitted detection signal is an ultrasonic signal, the collected detection signal is an ultrasonic signal reflected by an external object. Certainly, the collected detection signal in the embodiments of the present invention is not limited to the foregoing two types.

It should be noted that, a manner of determining a detection distance according to a detection signal varies with a detection signal used in the embodiments of the present invention. For example, if the infrared signal is used as the detection signal, a length of the detection distance is determined according to a value of a strength value of a collected detection signal reflected by the external object. If the ultrasonic signal is used as the detection signal, a length of the detection distance is determined according to a time of transmitting the detection signal and a time of receiving the detection signal.

In the embodiments of the present invention, an example in which a strength value of a detection signal reflects a length of a detection distance is mainly used for description. A detection signal is collected; a strength value of the collected detection signal is determined; a reference strength value is determined according to the determined strength value of the collected detection signal; and finally, a calibration threshold is determined according to the reference strength value. The calibration threshold is used to determine a calibration range of a detection distance. Because the reference strength value is determined according to the actually collected detection signal, the calibration threshold in the embodiments of the present invention adapts to an external environment in which the terminal device is located, that is, the determined calibration threshold can adapt to an environment change to be adaptively adjusted.

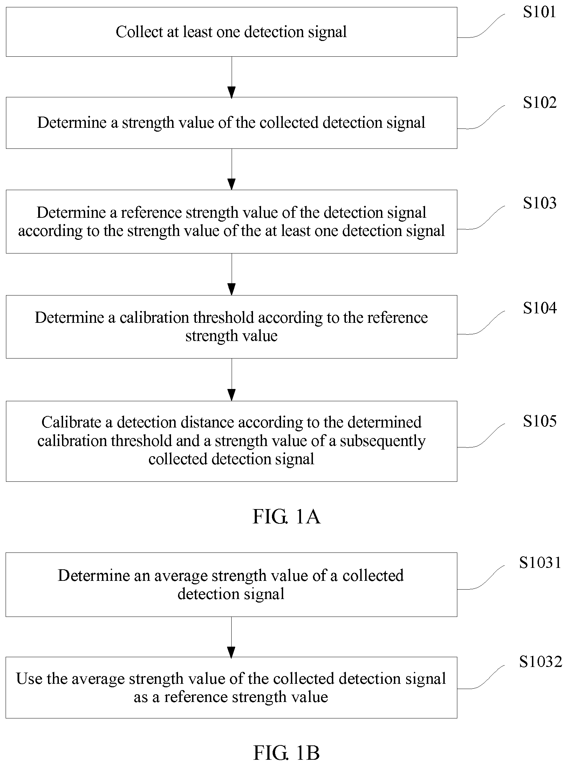

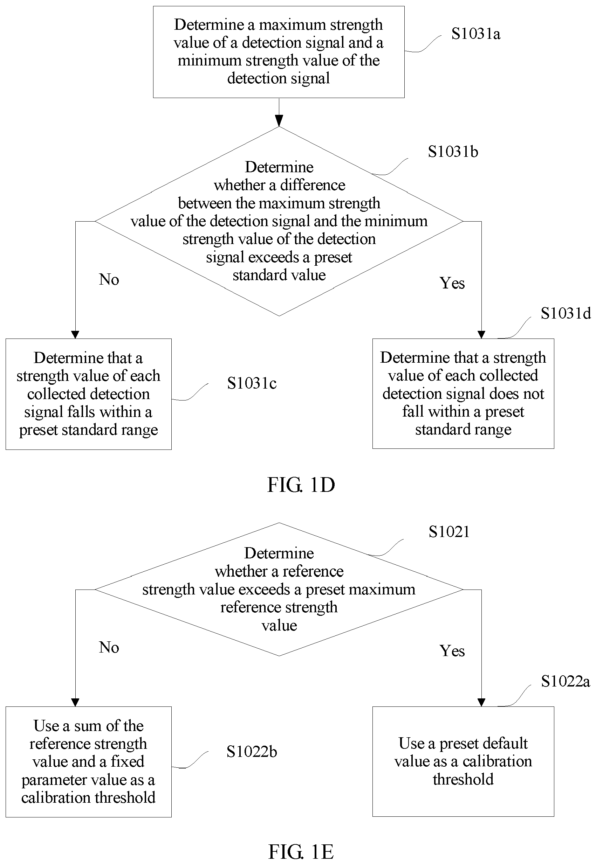

FIG. 1A shows a flowchart of a detection distance calibration method according to an embodiment of the present invention. The method may be executed by a terminal device, and the terminal device may be, for example, a mobile terminal such as a smartphone, a tablet computer, or a home gateway product. Certainly, the method may be executed by various components in a terminal device, and this is not construed as a limitation in this embodiment of the present invention. As shown in FIG. 1A, the method includes the following steps.

S101: Collect at least one detection signal.

Detection signals collected each time in a same environment may vary. Therefore, in this embodiment of the present invention, the at least one detection signal is collected, to ensure stability of the collected detection signal.

S102: Determine a strength value of the collected detection signal.

The strength value of the detection signal reflects a length of a detection distance. Therefore, in this embodiment of the present invention, the length of the detection distance is determined by determining the strength value of the detection signal. In specific implementation, a component such as a sensor may be disposed in the terminal device, to determine the strength value of the collected detection signal. For example, if the detection signal is an infrared signal, a strength value of the infrared signal may be determined by sensing luminous intensity of the reflected infrared signal.

S103: Determine a reference strength value of the detection signal according to the strength value of the at least one detection signal.

Strength values of the detection signals collected each time in the same environment may vary. Therefore, in this embodiment of the present invention, the reference strength value of the detection signal is determined according to the determined strength value of the at least one detection signal. The reference strength value may be obtained by means of calculation by using multiple algorithms. For example, by using strength values of detection signals continuously collected 30 times, an average value that is obtained by means of calculation and is of the strength values of the detection signals may be used as the reference strength value. Certainly, strength value fluctuation ranges of the detection signals continuously collected 30 times need to fall within a preset value range.

S104: Determine a calibration threshold according to the reference strength value.

In this embodiment of the present invention, the calibration threshold is used to determine a calibration range of the detection distance, and the strength value of the detection signal reflects the length of the detection distance. In specific implementation, the determined calibration threshold is also a signal strength value, and the signal strength value reflects a signal strength value for implementing a corresponding processing function by the terminal device within an effective detection distance.

In this embodiment of the present invention, the calibration threshold is determined according to the reference strength value of the detection signal, the reference strength value is determined according to the strength value of the actually collected detection signal, and the strength value of the actually collected detection signal can reflect a status of a current environment. Therefore, the calibration threshold can adapt to an environment change to be adaptively adjusted.

S105: Calibrate a detection distance according to the determined calibration threshold and a strength value of a subsequently collected detection signal.

In this embodiment of the present invention, the subsequently collected detection signal is relative to a detection signal collected in a process of determining the calibration threshold, that is, after the calibration threshold is determined, a collected detection signal may be referred to as the subsequently collected detection signal.

The strength value of the detection signal reflects the length of the detection distance. Generally, a larger strength value of the detection signal indicates a shorter detection distance, and a smaller strength value of the detection signal indicates a longer detection distance. Therefore, in this embodiment of the present invention, in a detection distance calibration process, the determined calibration threshold may be compared with the strength value of the subsequently collected detection signal to determine whether the detection distance falls within the calibration range. If the strength value of the subsequently collected detection signal exceeds the determined calibration threshold, it indicates that the detection distance falls within an effective calibration range. In this case, the terminal device may be triggered to perform a processing operation for implementing a corresponding function.

It should be noted that, in this embodiment of the present invention, there may be more than one determined calibration threshold. A condition for determining that the detection distance falls within the effective detection distance for performing a corresponding function by the terminal device is not limited to a case in which the strength value of the detection signal exceeds the determined calibration threshold, or may be a case in which the strength value of the detection signal does not exceed the determined calibration threshold. The determined calibration threshold may be set according to an actual situation.

According to the detection distance calibration method provided in this embodiment of the present invention, a reference strength value is determined according to a determined strength value of an actually collected detection signal, and a calibration threshold is determined according to the determined reference strength value. Therefore, the calibration threshold in this embodiment of the present invention can adapt to an environment change to be adaptively adjusted, and a phenomenon can be avoided that a calibration error occurs because there is always an obstacle within an effective detection distance range due to the environment change, which improves accuracy of calibrating a detection distance by a terminal device.

In an embodiment of the present invention, the following describes in detail a specific process, of determining the calibration threshold, involved in the foregoing embodiment.

In this embodiment of the present invention, to improve accuracy of the determined reference strength value, an average strength value of the collected detection signal may be used as the reference strength value.

In this embodiment of the present invention, to improve accuracy of the determined reference strength value, before the average strength value of the collected detection signal is used as the reference strength value, it is required to determine whether the strength value of the collected detection signal falls within a preset standard range, that is, determine whether the current environment is in a stable state.

In this embodiment of the present invention, different processing manners may be used according to whether the strength value of the collected detection signal falls within the preset standard range. In this embodiment of the present invention, the preset standard range refers to an acceptable strength value fluctuation range in a stable environment in a process in which the terminal device calibrates the detection distance. If a strength value of each currently collected detection signal falls within the preset standard range, it indicates that the current environment is in a stable state, and an average strength value of the detection signals may be directly determined according to the strength values of the currently collected detection signals. In other words, in this embodiment of the present invention, before the average strength value of the collected detection signal is used as the reference strength value, it is required to ensure that the strength value of each collected detection signal falls within the preset standard range. A specific implementation process is shown in FIG. 1B, and includes the following steps:
S1031: Determine that a strength value of each collected detection signal falls within a preset standard range.
S1032: Use an average strength value of the collected detection signal as the reference strength value.

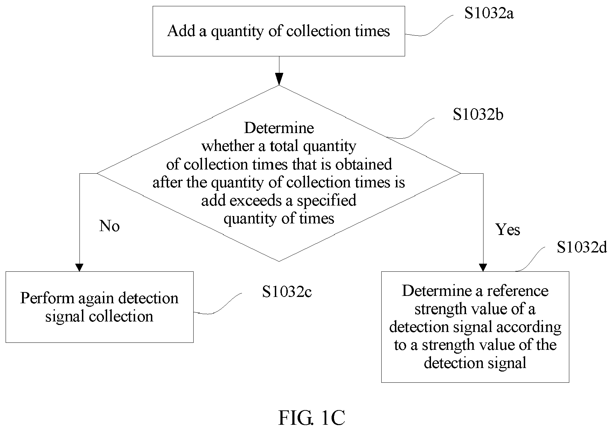

If a strength value of a currently collected detection signal does not fall within the preset standard range, it indicates that the current environment is in an unstable state. As shown in FIG. 1C, in this embodiment of the present invention, the following processing manner may be used in an unstable environment, and includes the following steps:
S1032a: Add a quantity of collection times.
S1032b: Determine whether a total quantity of collection times that is obtained after the quantity of collection times is added exceeds a specified quantity of times; and if the total quantity of collection times that is obtained after the quantity of collection times is added is less than the specified quantity of times, perform S1032c; or if the total quantity of collection times that is obtained after the quantity of collection times is added is not less than the specified quantity of times, perform S1032d.

In this embodiment of the present invention, the foregoing specified quantity of times may be set according to an actual situation, to avoid performing an excessive quantity of times of collecting in the unstable environment.

S1032c: If the total quantity of collection times that is obtained after the quantity of collection times is added is less than the specified quantity of times, perform again S101, that is, perform again detection signal collection.

S1032d: If the total quantity of collection times that is obtained after the quantity of collection times is added is not less than the specified quantity of times, directly perform the determining a reference strength value of the detection signal according to the strength value of the detection signal in S103, that is, if the average strength value of the collected detection signal is used as the reference strength value, directly determine the average strength value of the collected detection signal, and use the average strength value of the collected detection signal as the reference strength value.

In this embodiment of the present invention, the quantity of collection times is added, and it is determined whether the total quantity of collection times exceeds the specified quantity of times, which can avoid a problem of low accuracy of the determined reference strength value due to an unstable environment state.

Further, in this embodiment of the present invention, a manner shown in FIG. ID may be used to determine that the strength value of each detection signal falls within the preset standard range:
S1031a: Determine a maximum strength value of the detection signal and a minimum strength value of the detection signal according to the strength value of the at least one collected detection signal.
S1031b: Determine whether a difference between the maximum strength value of the detection signal and the minimum strength value of the detection signal exceeds a preset standard value.
   In this embodiment of the present invention, the preset standard value is determined according to a stable environment state that is determined according to an actual requirement. For example, if the strength value fluctuation range in the acceptable stable environment is set to 100, the preset standard value may be set to 100.
S1031c: If the difference between the maximum strength value of the detection signal and the minimum strength value of the detection signal does not exceed the preset standard value, determine that the strength value of each collected detection signal falls within the preset standard range.
S1031d: If the difference between the maximum strength value of the detection signal and the minimum strength value of the detection signal exceeds the preset standard value, determine that the strength value of each collected detection signal does not fall within the preset standard range.

In this embodiment of the present invention, to adapt to different environments, different calibration thresholds are determined, and a case in which the calibration threshold cannot be determined is avoided. As shown in FIG. IE, the following manner of determining the calibration threshold according to the reference strength value may be used, and includes the following steps:
S1021: Determine whether the reference strength value exceeds a preset maximum reference strength value; and if the reference strength value exceeds the preset maximum reference strength value, perform S1022a; or if the reference strength value does not exceed the preset maximum reference strength value, perform S1022b.
   In this embodiment of the present invention, the maximum reference strength value is related to a strength sensing register in a sensing apparatus, in the terminal device, for determining a strength value of a detection signal. A bit quantity of the strength sensing register in the sensing apparatus determines a maximum value of the maximum reference strength value. For example, if the bit quantity of the strength sensing register in the sensing apparatus is 10, the maximum reference strength value is 2¹⁰=1024. If the strength value of the actually collected detection signal exceeds the maximum reference strength value, a strength value that is of a detection signal and is determined by the sensing apparatus does not change even within a shortest detection distance.
   In this embodiment of the present invention, considering that normal detection distance calibration may be affected by a factor such as environment instability in an actual detection distance calibration process, when the maximum reference strength value is being determined, environment impact on the strength value of the detection signal may be taken into consideration, and a particular margin value may be set. Generally, the specified margin value and a preset standard value corresponding to the strength value fluctuation range of the detection signal in the acceptable stable environment are subtracted from a maximum strength value that is of a detection signal and is corresponding to the bit quantity of the register, to obtain a value, and the value is used as the maximum reference strength value.
S1022a: If the reference strength value exceeds the preset maximum reference strength value, use a preset default value as a calibration threshold for triggering an infrared sensing apparatus to send a trigger signal.
   In this embodiment of the present invention, the default value is a reference strength value determined according to at least one collected stable detection signal. A stable detection signal means that a strength value of the detection signal falls within a specified strength value range. For example, if the specified strength value range is from 90 to 100, the strength value of the detection signal fluctuates in the range of 90 to 100, and it may indicate that the detection signal is a stable detection signal.
   In this embodiment of the present invention, if the reference strength value exceeds the preset maximum reference strength value, the default value is set as the calibration threshold for triggering the infrared sensing apparatus to send a trigger signal, which can avoid a problem of low accuracy of the determined reference strength value due to an unstable environment state.
S1022b: Use a sum of the reference strength value and a fixed parameter value as the calibration threshold if the reference strength value does not exceed the preset maximum reference strength value.

Due to impact of factors such as a structure of the sensing apparatus, a location, and a thin film, the reference strength value determined by the sensing apparatus in the terminal device varies. That is, strength values of detection signals within a same detection distance also vary. However, at a same detection distance location, an absolute difference between the reference strength value and the strength value of the actually collected detection signal is relatively fixed, and the fixed difference may be obtained by collecting statistics about sample test data. In this embodiment of the present invention, the fixed parameter value generally refers to a difference between the strength value of the actually collected detection signal and the reference strength value if the sensing apparatus in the terminal device uses a same drive current and a same pulse value within a specified detection distance, and the difference is relatively fixed. For example, if the detection distance is 5 cm, a strength value of a detection signal collected for the first time is 3, the determined reference strength value is 2, and a difference between the two values is 1; a strength value of a detection signal collected for the second time is 4, the determined reference strength value is 3, a difference between the two values is 1, and the fixed parameter value may be set to 1.

In this embodiment of the present invention, the sum of the reference strength value and the fixed parameter value is used as the calibration threshold if the reference strength value does not exceed the preset maximum reference strength value. The calibration threshold can be determined with reference to an assembly structure of the sensing apparatus in the terminal device and the current environment, which can better adapt to different environments.

In an embodiment of the present invention, with reference to practical application, the following describes in detail the detection distance calibration method involved in the foregoing embodiment of the present invention. In this embodiment of the present invention, an example in which a terminal device calibrates a detection distance by using an infrared technology is used for description.

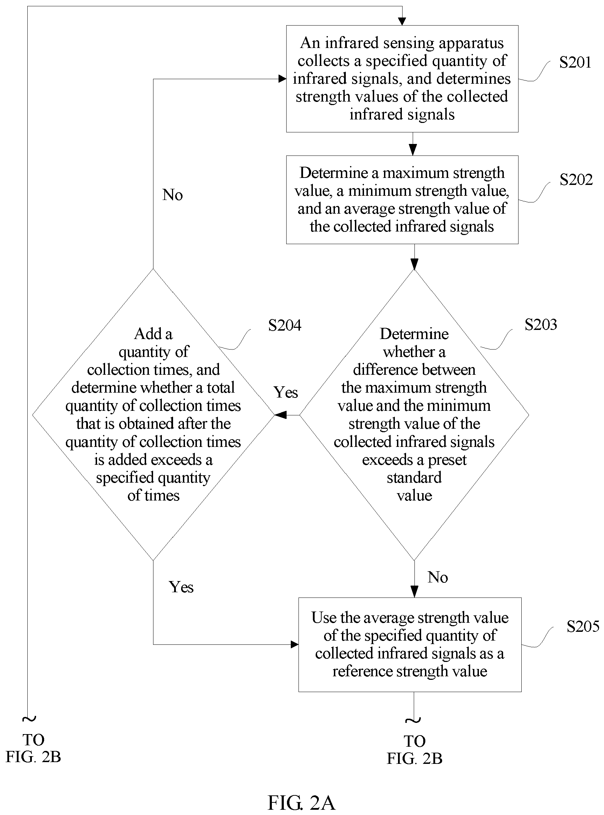

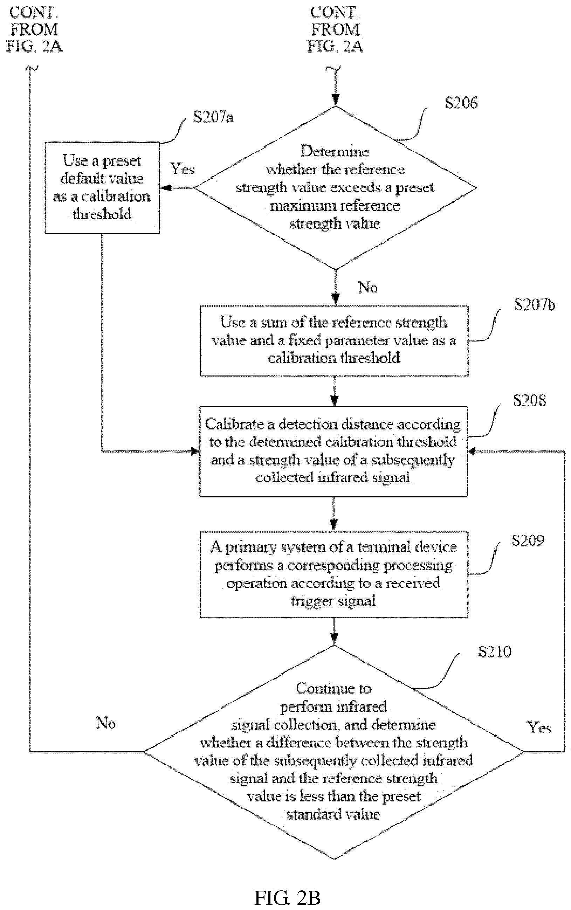

FIG. 2A and FIG. 2B show a flowchart of a specific implementation process to which a detection distance calibration method provided in an embodiment of the present invention is applied, and the method includes the following steps:
S201: An infrared sensing apparatus collects a specified quantity of infrared signals, and determines strength values of the collected infrared signals.
   In this embodiment of the present invention, the infrared sensing apparatus may be any infrared sensing component that can transmit an infrared signal and collect the infrared signal. By collecting an infrared signal reflected by an external object, the infrared sensing component may determine a strength value of the infrared signal. For example, the infrared sensing component may be an infrared sensing apparatus that includes an infrared sensing chip and an infrared light emitting diode.
S202: Determine a maximum strength value, a minimum strength value, and an average strength value of the collected infrared signals.
S203: Compare a difference between the maximum strength value and the minimum strength value of the collected infrared signals with a preset standard value; and if the difference between the maximum strength value and the minimum strength value of the collected infrared signals does not exceed the preset standard value, perform S205; otherwise, perform S204.
S204: Add a quantity of collection times; determine whether a total quantity of collection times that is obtained after the quantity of collection times is added exceeds a specified quantity of times; and if the total quantity of collection times that is obtained after the quantity of collection times is added is less than the specified quantity of times, perform again S201, that is, perform again detection signal collection; or if the total quantity of collection times that is obtained after the quantity of collection times is added is not less than the specified quantity of times, perform S205.
S205: Use the average strength value of the specified quantity of collected infrared signals as a reference strength value.
S206: Determine whether the reference strength value exceeds a preset maximum reference strength value; and if the reference strength value exceeds the preset maximum reference strength value, perform S207a; or if the reference strength value does not exceed the preset maximum reference strength value, perform S207b.
S207a: Use a preset default value as a calibration threshold.
S207b: Use a sum of the reference strength value and a fixed parameter value as a calibration threshold.
S208: Calibrate a detection distance according to the determined calibration threshold and a strength value of a subsequently collected infrared signal.
   In this embodiment of the present invention, if the strength value of the subsequently collected infrared signal exceeds the calibration threshold, the infrared sensing apparatus may be triggered to send a trigger signal to a primary system of the terminal device.
   In this embodiment of the present invention, that the infrared sensing apparatus sends the trigger signal to the primary system of the terminal device may be that the trigger signal is sent to the primary system in a manner of outputting a low level by using an interruption pin of the infrared sensing chip.
S209: A primary system of the terminal device performs a corresponding processing operation according to a received trigger signal.
S210: Continue to perform infrared signal collection; determine whether a difference between the strength value of the subsequently collected infrared signal and the reference strength value is less than a preset standard value corresponding to a strength value fluctuation range of an infrared signal detected in a stable environment; and if the difference between the strength value of the detected infrared signal and the reference strength value is not less than preset standard value, it indicates that a current environment changes, perform again S201, and determine again the reference strength value; or if the difference between the strength value of the detected infrared signal and the reference strength value is less than the preset standard value, it indicates that a current environment does not change, and continue to perform the calibrating a detection distance in S208.

According to the foregoing detection distance calibration method in this embodiment of the present invention, a calibration threshold is determined according to a strength value of a currently collected detection signal, and can adapt to an environment change to be adaptively adjusted, which avoids a mistaken trigger phenomenon caused by the environment change. Further, in this embodiment of the present invention, after the calibration threshold is determined, if a difference between a strength value of a subsequently collected detection signal and a reference strength value is not less than a preset standard value, it indicates that a current environment changes, and the reference strength value needs to be determined again, so that the calibration threshold can be adjusted by further adapting to the environment change.

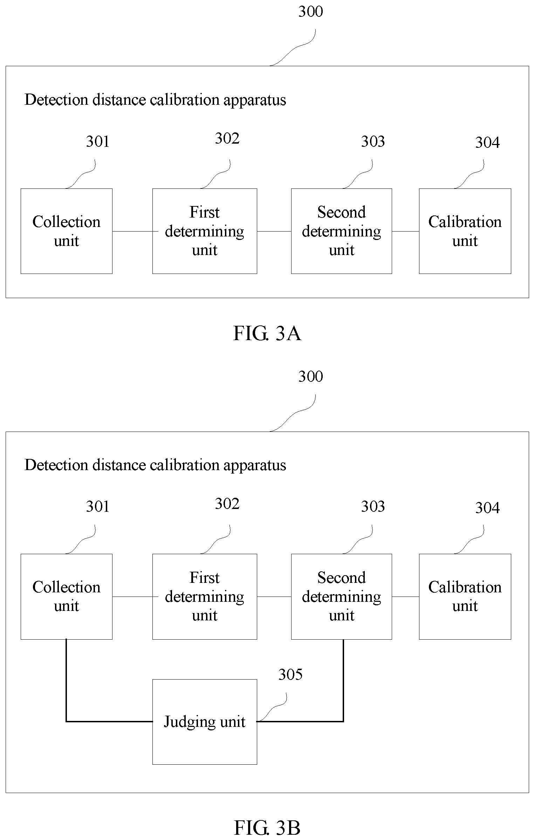

Based on the detection distance calibration method provided in the foregoing embodiment, an embodiment of the present invention further provides a detection distance calibration apparatus 300. As shown in FIG. 3A, the detection distance calibration apparatus 300 includes a collection unit 301, a first determining unit 302, a second determining unit 303, and a calibration unit 304.

The collection unit 301 is configured to collect at least one detection signal.

The first determining unit 302 is configured to determine a strength value of the at least one detection signal collected by the collection unit 301, where the strength value of the detection signal reflects a length of a detection distance.

The second determining unit 303 is configured to: determine a reference strength value of the detection signal according to the strength value that is of the at least one detection signal and is determined by the first determining unit 302; and determine a calibration threshold according to the reference strength value. The calibration threshold is used to determine a calibration range of the detection distance.

The calibration unit 304 is configured to calibrate the detection distance according to the calibration threshold determined by the second determining unit 303 and a strength value of a subsequently collected detection signal.

In a first implementation manner, the second determining unit 303 is specifically configured to determine the reference strength value of the detection signal according to the strength value of the at least one detection signal in the following manner:
using an average strength value of the collected detection signal as the reference strength value of the detection signal.

In a second implementation manner, as shown in FIG. 3B, the detection distance calibration apparatus 300 further includes a judging unit 305.

The judging unit 305 is configured to determine whether the reference strength value exceeds a preset maximum reference strength value.

The second determining unit 303 is specifically configured to determine the calibration threshold according to the reference strength value in the following manner:
using a preset default value as the calibration threshold if a result of the determining of the judging unit 305 is that the reference strength value exceeds the preset maximum reference strength value, where the default value is a reference strength value determined according to at least one collected stable detection signal; or using a sum of the reference strength value and a fixed parameter value as the calibration threshold if a result of the determining of the judging unit 305 is that the reference strength value does not exceed the preset maximum reference strength value.

In a third implementation manner, the second determining unit 303 is further configured to:
before determining the reference strength value of the detection signal according to the strength value of the at least one detection signal, determine that a strength value of each collected detection signal falls within a preset standard range.

In a fourth implementation manner, the second determining unit 303 is specifically configured to determine, in the following manner, that the strength value of each collected detection signal falls within the preset standard range:
determining a maximum strength value of the detection signal and a minimum strength value of the detection signal according to the strength value of the at least one collected detection signal; and
if a difference between the maximum strength value of the detection signal and the minimum strength value of the detection signal does not exceed a preset standard value, determining that the strength value of each collected detection signal falls within the preset standard range.

In a fifth implementation manner, the collection unit 301 is further configured to:
before the reference strength value of the detection signal is determined according to the strength value of the at least one detection signal, add a quantity of collection times when a detection signal whose strength value does not fall within a preset standard range exists in the at least one detection signal.

The detection distance calibration apparatus 300 further includes the judging unit 305.

The judging unit 305 is configured to determine whether a total quantity of collection times that is obtained after the quantity of collection times is added exceeds a specified quantity of times.

The collection unit 301 is further configured to:
if a result of the determining of the judging unit 305 is that the total quantity of collection times that is obtained after the quantity of collection times is added is less than the specified quantity of times, perform again the collecting at least one detection signal.

The second determining unit 303 is further configured to:
if a result of the determining of the judging unit 305 is that the total quantity of collection times that is obtained after the quantity of collection times is added is not less than the specified quantity of times, perform the determining a reference strength value of the detection signal according to the strength value of the at least one detection signal.

In a sixth implementation manner, the collection unit 301 is further configured to:
after the second determining unit 303 determines the calibration threshold, if the first determining unit 302 determines that a difference between the strength value of the subsequently collected detection signal and the reference strength value is not less than the preset standard value, perform again the collecting at least one detection signal.

In a seventh implementation manner, the detection signal collected by the collection unit 301 includes an infrared signal or an ultrasonic signal.

The detection distance calibration apparatus 300 provided in this embodiment of the present invention may be a terminal device, and the terminal device may be, for example, a mobile terminal such as a smartphone, a tablet computer, or a home gateway product. Certainly, the detection distance calibration apparatus 300 may be a component in a terminal device, and this is not construed as a limitation in this embodiment of the present invention.

It should be noted that, the detection distance calibration apparatus 300 provided in this embodiment of the present invention may be configured to execute the method procedures shown in FIG. 1A to FIG. IE, and FIG. 2A and FIG. 2B. Therefore, for descriptions of the detection distance calibration apparatus 300 in this embodiment of the present invention that are not given in detail, refer to descriptions of the related method embodiments. Details are not described again in this embodiment of the present invention.

According to the detection distance calibration apparatus 300 provided in this embodiment of the present invention, a calibration threshold is determined according to a strength value of a currently collected detection signal, and can adapt to an environment change to be adaptively adjusted, which avoids a mistaken trigger phenomenon caused by the environment change. Further, in this embodiment of the present invention, after the calibration threshold is determined, if a difference between a strength value of a subsequently collected detection signal and a reference strength value is not less than a preset standard value, it indicates that a current environment changes, and the reference strength value needs to be determined again, so that the calibration threshold can be adjusted by further adapting to the environment change.

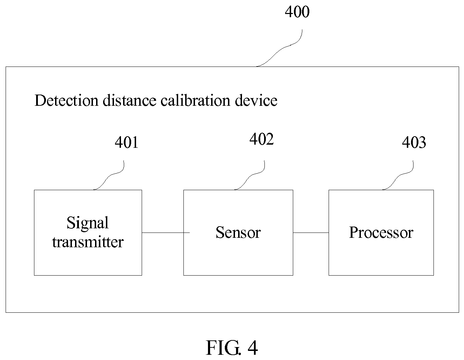

With reference to the detection distance calibration method and apparatus provided in the foregoing embodiments, an embodiment of the present invention further provides a detection distance calibration device 400. As shown in FIG. 4, the detection distance calibration device 400 includes a signal transmitter 401, a sensor 402, and a processor 403.

It should be noted that, the detection distance calibration device 400 in this embodiment of the present invention may further include a memory and a bus according to an actual situation, and the memory is configured to store program code executed by the processor 403. The signal transmitter 401, the sensor 402, the processor 403, and the memory are all connected to the bus.

In this embodiment of the present invention, the processor 403 is a control center of the detection distance calibration device 400, and is connected to each part of the entire terminal device by using various interfaces and lines, and performs various functions of the terminal device and/or processes data by running or executing a software program and/or module stored in the memory and invoking data stored in the memory. The processor 403 may include an integrated circuit (Integrated Circuit, IC for short). For example, the processor 403 may include a single packaged IC, or may include multiple connected packaged ICs with a same function or different functions. For example, the processor 403 may include only a central processing unit (Central Processing Unit, CPU for short), or may be a combination of a GPU, a digital signal processor (Digital Signal Processor, DSP for short), and a control chip (for example, a baseband chip) in a communications unit. In an implementation manner of the present invention, the CPU may be a single computing core, or may include multiple computing cores.

In this embodiment of the present invention, the sensor 402 may be a sensing chip, and may be implemented by, for example, an infrared sensing chip or an ultrasonic sensing chip in specific implementation.

In this embodiment of the present invention, the signal transmitter 401 may be a transmitter that can transmit a detection signal, and may be, for example, an infrared transmitter or an ultrasonic transmitter in specific implementation.

Further, in specific implementation of this embodiment of the present invention, the signal transmitter 401 and the sensor 402 may be integrated together, or may be separate hardware, which is not limited in this embodiment of the present invention.

In a specific implementation process of the present invention:
the signal transmitter 401 is configured to transmit at least one detection signal;
the sensor 402 is configured to: collect the at least one detection signal, and determine a strength value of the at least one detection signal, where the strength value of the detection signal reflects a length of a detection distance;
the processor 403 is configured to: obtain the strength value that is of the at least one detection signal and is determined by the sensor 402; determine a reference strength value of the detection signal according to the strength value of the at least one detection signal; and determine a calibration threshold according to the reference strength value. The calibration threshold is used to determine a calibration range of the detection distance; and
the processor 403 is further configured to calibrate the detection distance according to the calibration threshold and a strength value of a detection signal subsequently collected by the sensor 402.

In a first implementation manner, the processor 403 is specifically configured to determine the reference strength value of the detection signal according to the strength value of the at least one detection signal in the following manner:
using an average strength value of the collected detection signal as the reference strength value of the detection signal.

In a second implementation manner, the processor 403 is further configured to determine whether the reference strength value exceeds a preset maximum reference strength value.

The processor 403 is specifically configured to determine the calibration threshold according to the reference strength value in the following manner:
using a preset default value as the calibration threshold if the reference strength value exceeds the preset maximum reference strength value, where the default value is a reference strength value determined according to at least one collected stable detection signal; or using a sum of the reference strength value and a fixed parameter value as the calibration threshold if the reference strength value does not exceed the preset maximum reference strength value.

In a third implementation manner, the processor 403 is further configured to:
before determining the reference strength value of the detection signal according to the strength value of the at least one detection signal, determine that a strength value of each collected detection signal falls within a preset standard range.

In a fourth implementation manner, the processor 403 is specifically configured to determine, in the following manner, that the strength value of each collected detection signal falls within the preset standard range:
determining a maximum strength value of the detection signal and a minimum strength value of the detection signal according to the strength value of the at least one collected detection signal; and
if a difference between the maximum strength value of the detection signal and the minimum strength value of the detection signal does not exceed a preset standard value, determining that the strength value of each collected detection signal falls within the preset standard range.

In a fifth implementation manner, the processor 403 is further configured to:
before determining the reference strength value of the detection signal according to the strength value of the at least one detection signal, add a quantity of collection times when a detection signal whose strength value does not fall within a preset standard range exists in the at least one detection signal; and
if a total quantity of collection times that is obtained after the quantity of collection times is added is less than a specified quantity of times, instruct the sensor to perform again the collecting the at least one detection signal; or if a total quantity of collection times that is obtained after the quantity of collection times is added is not less than a specified quantity of times, perform the determining a reference strength value of the detection signal according to the strength value of the at least one detection signal.

In a sixth implementation manner, the processor 403 is further configured to:
after determining the calibration threshold, if a difference between the strength value of the subsequently collected detection signal and the reference strength value is not less than the preset standard value, instruct the sensor to perform again the collecting the at least one detection signal.

The detection distance calibration device 400 provided in this embodiment of the present invention may be a terminal device, and the terminal device may be, for example, a mobile terminal such as a smartphone, a tablet computer, or a home gateway product. Certainly, the detection distance calibration device 400 may be a component in a terminal device, and this is not construed as a limitation in this embodiment of the present invention.

It should be noted that, the detection distance calibration device 400 provided in this embodiment of the present invention may be configured to execute the method procedures shown in FIG. 1A to FIG. IE, and FIG. 2A and FIG. 2B. Therefore, for descriptions of the detection distance calibration device 400 in this embodiment of the present invention that are not given in detail, refer to descriptions of the related method embodiments. Details are not described again in this embodiment of the present invention.

According to the detection distance calibration device 400 provided in this embodiment of the present invention, a calibration threshold is determined according to a strength value of a currently collected detection signal, and can adapt to an environment change to be adaptively adjusted, which avoids a mistaken trigger phenomenon caused by the environment change. Further, in this embodiment of the present invention, after the calibration threshold is determined, if a difference between a strength value of a subsequently collected detection signal and a reference strength value is not less than a preset standard value, it indicates that a current environment changes, and the reference strength value needs to be determined again, so that the calibration threshold can be adjusted by further adapting to the environment change.

Persons skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may also be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present invention have been described, persons skilled in the art can make changes and modifications to these embodiments once they learn the basic inventive concept. Therefore, the following claims are intended to be construed as to cover the example embodiments and all changes and modifications falling within the scope of the present invention.

## Claims

1. A detection distance calibration method, comprising:
collecting (S101) at least one detection signal;
determining (SI02) a strength value of the at least one detection signal, wherein the strength value of the detection signal reflects a length of a detection distance;
determining (S103) a reference strength value of the at least one detection signal according to the strength value of the at least one detection signal;
determining (SI04) a calibration threshold according to the reference strength value, wherein the calibration threshold is used to determine a calibration range of the detection distance; and
calibrating (S105) the detection distance according to the calibration threshold and a strength value of a subsequently collected detection signal;
**characterized in that** the determining a calibration threshold according to the reference strength value specifically comprises:
determining (S1021) whether the reference strength value exceeds a preset maximum reference strength value; and
using (S1022a) a preset default value as the calibration threshold if the reference strength value exceeds the preset maximum reference strength value, wherein the default value is a reference value determined according to at least one collected stable detection signal; or using a sum of the reference strength value and a fixed parameter value as the calibration threshold if the reference strength value does not exceed the preset maximum reference strength value.

2. The method according to claim 1, wherein the determining a reference strength value of the at least one detection signal according to the strength value of the at least one detection signal specifically comprises:
using (S1032) an average strength value of the at least one collected detection signal as the reference strength value of the at least one detection signal.

3. The method according to claim 1 or 2, wherein before the determining a reference strength value of the at least one detection signal according to the strength value of the at least one detection signal, the method further comprises:
determining (S1031c) that a strength value of each collected detection signal falls within a preset standard range.

4. The method according to claim 3, wherein the determining that a strength value of each collected detection signal falls within a preset standard range specifically comprises:
determining (S1031b) a maximum strength value of the at least one detection signal and a minimum strength value of the at least one detection signal according to the strength value of the at least one collected detection signal; and
if a difference between the maximum strength value of the at least one detection signal and the minimum strength value of the at least one detection signal does not exceed a preset standard value, determining (S1031c) that the strength value of each collected detection signal falls within the preset standard range.

5. The method according to claim 1 or 2, wherein before the determining a reference strength value of the at least one detection signal according to the strength value of the at least one detection signal, the method further comprises:
adding together (S1032a) a quantity of collection times when a detection signal whose strength value does not fall within a preset standard range exists in the at least one detection signal;
determining (S1032b) whether a total quantity of collection times that is obtained after the quantity of collection times is added exceeds a specified quantity of times; and
if the total quantity of collection times that is obtained after the quantity of collection times is added is less than the specified quantity of times, performing again (S1032c) the collecting at least one detection signal; or if the total quantity of collection times that is obtained after the quantity of collection times is added is not less than the specified quantity of times, performing (S1032d) the determining a reference strength value of the at least one detection signal according to the strength value of the at least one detection signal.

6. The method according to any one of claims 1 to 5, wherein after the determining a calibration threshold, the method further comprises:
if a difference between the strength value of the subsequently collected detection signal and the reference strength value is not less than the preset standard value, performing again the collecting at least one detection signal, the determining a strength value, the determining a reference strength value, and determining a calibration threshold.

7. The method according to any one of claims 1 to 6, wherein the detection signal comprises an infrared signal.

8. A detection distance calibration apparatus, comprising:
a collection unit (301), configured to collect at least one detection signal;
a first determining unit (302), configured to determine a strength value of the at least one detection signal collected by the collection unit, wherein the strength value of the detection signal reflects a length of a detection distance;
a second determining unit (303), configured to: determine a reference strength value of the at least one detection signal according to the strength value that is of the at least one detection signal and is determined by the first determining unit; and determine a calibration threshold according to the reference strength value, wherein the calibration threshold is used to determine a calibration range of the detection distance; and
a calibration unit (304), configured to calibrate the detection distance according to the calibration threshold determined by the second determining unit and a strength value of a subsequently collected detection signal;
**characterized in that** the apparatus further comprises a judging unit, wherein
the judging unit is configured to determine whether the reference strength value exceeds a preset maximum reference strength value; and
the second determining unit is specifically configured to determine the calibration threshold according to the reference strength value in the following manner:
using a preset default value as the calibration threshold if a result of the determining of the judging unit is that the reference strength value exceeds the preset maximum reference strength value, wherein the default value is a reference value determined according to at least one collected stable detection signal; or using a sum of the reference strength value and a fixed parameter value as the calibration threshold if a result of the determining of the judging unit is that the reference strength value does not exceed the preset maximum reference strength value.

9. The apparatus according to claim 8, wherein the second determining unit is specifically configured to determine the reference strength value of the at least one detection signal according to the strength value of the at least one detection signal in the following manner:
using an average strength value of the at least one collected detection signal as the reference strength value of the at least one detection signal.

10. The apparatus according to claim 8 or 9, wherein the second determining unit is further configured to:
before determining the reference strength value of the at least one detection signal according to the strength value of the at least one detection signal, determine that a strength value of each collected detection signal falls within a preset standard range.

11. The apparatus according to claim 10, wherein the second determining unit is specifically configured to determine, in the following manner, that the strength value of each collected detection signal falls within the preset standard range:
determining a maximum strength value of the at least one detection signal and a minimum strength value of the at least one detection signal according to the strength value of the at least one collected detection signal; and
if a difference between the maximum strength value of the at least one detection signal and the minimum strength value of the at least one detection signal does not exceed a preset standard value, determining that the strength value of each collected detection signal falls within the preset standard range.

12. The apparatus according to claim 8 or 9, wherein the collection unit is further configured to:
before the reference strength value of the at least one detection signal is determined according to the strength value of the at least one detection signal, add together a quantity of collection times when a detection signal whose strength value does not fall within a preset standard range exists in the at least one detection signal;
the apparatus comprises the judging unit (305), wherein
the judging unit is configured to determine whether a total quantity of collection times that is obtained after the quantity of collection times is added exceeds a specified quantity of times; and
the collection unit is further configured to:
if a result of the determining of the judging unit is that the total quantity of collection times that is obtained after the quantity of collection times is added is less than the specified quantity of times, perform again the collecting at least one detection signal; or
the second determining unit is further configured to:
if a result of the determining of the judging unit is that the total quantity of collection times that is obtained after the quantity of collection times is added is not less than the specified quantity of times, perform the determining a reference strength value of the at least one detection signal according to the strength value of the at least one detection signal.

## Patentansprüche

1. Detektionsabstandskalibrierungsverfahren, umfassend:
Erfassen (S101) mindestens eines Detektionssignals;
Bestimmen (S102) eines Stärkewerts des mindestens einen Detektionssignals, wobei der Stärkewert des Detektionssignals eine Länge eines Detektionsabstands darstellt;
Bestimmen (S103) eines Referenzstärkewerts des mindestens einen Detektionssignals gemäß dem Stärkewert des mindestens einen Detektionssignals;
Bestimmen (S104) eines Kalibrierungsschwellenwerts gemäß dem Referenzstärkewert, wobei der Kalibrierungsschwellenwert verwendet wird, um einen Kalibrierungsbereich des Detektionsabstands zu bestimmen; und
Kalibrieren (S105) des Detektionsabstands gemäß dem Kalibrierungsschwellenwert und einem Stärkewert eines nachfolgend erfassten Detektionssignals;
**dadurch gekennzeichnet, dass** das Bestimmen eines Kalibrierungsschwellenwerts gemäß dem Referenzstärkenwert insbesondere umfasst:
Bestimmen (S1021), ob der Referenzstärkewert einen voreingestellten maximalen Referenzstärkewert überschreitet; und
Verwenden (S1022a) eines voreingestellten Standardwerts als den Kalibrierungsschwellenwert, wenn der Referenzstärkewert den voreingestellten maximalen Referenzstärkewert überschreitet, wobei der Standardwert ein Referenzwert ist, der gemäß zumindest einem erfassten stabilen Detektionssignal bestimmt wird; oder Verwenden einer Summe des Referenzstärkewerts und eines festen Parameterwerts als den Kalibrierungsschwellenwert, wenn der Referenzstärkewert den voreingestellten maximalen Referenzstärkewert nicht überschreitet.

2. Verfahren nach Anspruch 1, wobei das Bestimmen eines Referenzstärkewerts des mindestens einen Detektionssignals gemäß dem Stärkewert des mindestens einen Detektionssignals insbesondere umfasst:
Verwenden (S1032) eines Durchschnittsstärkewerts des mindestens einen erfassten Detektionssignals als den Referenzstärkewert des mindestens einen Detektionssignals.

3. Verfahren nach Anspruch 1 oder 2, wobei das Verfahren vor dem Bestimmen eines Referenzstärkewerts des mindestens einen Detektionssignals gemäß dem Stärkewert des mindestens einen Detektionssignals ferner umfasst:
Bestimmen (S1031c), dass ein Stärkewert jedes erfassten Detektionssignals in einem voreingestellten Standardbereich liegt.

4. Verfahren nach Anspruch 3, wobei das Bestimmen, dass ein Stärkewert jedes erfassten Detektionssignals in einem voreingestellten Standardbereich liegt, insbesondere umfasst:
Bestimmen (S1031b) eines maximalen Stärkewerts des mindestens einen Detektionssignals und eines minimalen Stärkewerts des mindestens einen Detektionssignals gemäß dem Stärkewert des mindestens einen erfassten Detektionssignals; und
wenn eine Differenz zwischen dem maximalen Stärkewert des mindestens einen Detektionssignals und dem minimalen Stärkewert des mindestens einen Detektionssignals einen voreingestellten Standardwert nicht überschreitet, Bestimmen (S1031c), dass der Stärkewert jedes erfassten Detektionssignals in dem voreingestellten Standardbereich liegt.

5. Verfahren nach Anspruch 1 oder 2, wobei vor dem Bestimmen eines Referenzstärkewerts des mindestens einen Detektionssignals gemäß dem Stärkewert des mindestens einen Detektionssignals das Verfahren ferner umfasst:
Zusammenaddieren (S1032a) einer Menge von Erfassungsanzahlen, wenn ein Detektionssignal, dessen Stärkewert nicht in einem voreingestellten Standardbereich liegt, in dem mindestens einen Detektionssignal vorhanden ist;
Bestimmen (S1032b), ob eine Gesamtmenge von Erfassungsanzahlen, die nach dem Hinzufügen der Menge von Erfassungsanzahlen erhalten wird, eine bestimmte Menge von Anzahlen überschreitet; und
wenn die Gesamtmenge von Erfassungsanzahlen, die erhalten wird, nachdem die Menge von Erfassungsanzahlen hinzugefügt wird, kleiner als die festgelegte Menge von Anzahlen ist, erneutes Durchführen (S1032c) des Erfassens von mindestens einem Detektionssignal; oder wenn die Gesamtmenge von Erfassungsanzahlen, die erhalten wird, nachdem die Menge von Erfassungsanzahlen hinzugefügt wird, nicht kleiner als die festgelegte Menge von Anzahlen ist, Durchführen (S1032d) des Bestimmens eines Referenzstärkewerts des mindestens einen Detektionssignals gemäß dem Stärkewert des mindestens einen Detektionssignals.

6. Verfahren nach einem der Ansprüche 1 bis 5, wobei nach dem Bestimmen eines Kalibrierungsschwellenwerts das Verfahren ferner umfasst:
wenn eine Differenz zwischen dem Stärkewert des nachfolgend erfassten Detektionssignals und dem Referenzstärkewert nicht kleiner als der voreingestellte Standardwert ist, erneutes Durchführen des Erfassens von mindestens einem Detektionssignal, des Bestimmens eines Stärkewerts, des Bestimmens eines Referenzstärkewerts und des Bestimmens eines Kalibrierungsschwellenwerts.

7. Verfahren nach einem der Ansprüche 1 bis 6, wobei das Detektionssignal ein Infrarotsignal umfasst.

8. Detektionsabstandskalibrierungseinrichtung, umfassend:
eine Erfassungseinheit (301), die konfiguriert ist, um mindestens ein Detektionssignal zu erfassen;
eine erste Bestimmungseinheit (302), die konfiguriert ist, um einen Stärkewert des mindestens einen von der Erfassungseinheit erfassten Detektionssignals zu bestimmen, wobei der Stärkewert des Detektionssignals eine Länge eines Detektionsabstands darstellt;
eine zweite Bestimmungseinheit (303), die konfiguriert ist, um: einen Referenzstärkewert des mindestens einen Detektionssignals gemäß dem Stärkewert zu bestimmen, der zu dem mindestens einen Detektionssignal gehört und durch die erste Bestimmungseinheit bestimmt wird; und einen Kalibrierungsschwellenwert gemäß dem Referenzstärkewert zu bestimmen, wobei der Kalibrierungsschwellenwert verwendet wird, um einen Kalibrierungsbereich des Detektionsabstands zu bestimmen; und
eine Kalibrierungseinheit (304), die konfiguriert ist, um den Detektionsabstand gemäß dem Kalibrierungsschwellenwert, der durch die zweite Bestimmungseinheit bestimmt wird, und einem Stärkewert eines nachfolgend erfassten Detektionssignals zu kalibrieren;
**dadurch gekennzeichnet, dass** die Einrichtung ferner eine Beurteilungseinheit umfasst, wobei die Beurteilungseinheit konfiguriert ist, um zu bestimmen, ob der Referenzstärkewert einen voreingestellten maximalen Referenzstärkewert überschreitet; und
die zweite Bestimmungseinheit insbesondere konfiguriert ist, um den Kalibrierungsschwellenwert gemäß dem Referenzstärkewert auf folgende Weise zu bestimmen:
Verwenden eines voreingestellten Standardwerts als den Kalibrierungsschwellenwert, wenn ein Ergebnis des Bestimmens der Beurteilungseinheit ist, dass der Referenzstärkewert den voreingestellten maximalen Referenzstärkewert überschreitet, wobei der Standardwert ein Referenzwert ist, der gemäß zumindest einem erfassten stabilen Detektionssignal bestimmt wird; oder
Verwenden einer Summe des Referenzstärkewerts und eines festen Parameterwerts als den Kalibrierungsschwellenwert, wenn ein Ergebnis des Bestimmens der Beurteilungseinheit ist, dass der Referenzstärkewert den voreingestellten maximalen Referenzstärkewert nicht überschreitet.

9. Einrichtung nach Anspruch 8, wobei die zweite Bestimmungseinheit insbesondere konfiguriert ist, um den Referenzstärkewert des mindestens einen Detektionssignals gemäß dem Stärkewert des mindestens einen Detektionssignals auf folgende Weise zu bestimmen:
Verwenden eines Durchschnittsstärkewerts des mindestens einen erfassten Detektionssignals als den Referenzstärkewert des mindestens einen Detektionssignals.

10. Einrichtung nach Anspruch 8 oder 9, wobei die zweite Bestimmungseinheit ferner konfiguriert ist, um:
vor dem Bestimmen des Referenzstärkewerts des mindestens einen Detektionssignals gemäß dem Stärkewert des mindestens einen Detektionssignals, zu bestimmen, dass ein Stärkewert jedes erfassten Detektionssignals in einem voreingestellten Standardbereich liegt.

11. Einrichtung nach Anspruch 10, wobei die zweite Bestimmungseinheit insbesondere konfiguriert ist, um in der folgenden Weise zu bestimmen, dass der Stärkewert jedes erfassten Detektionssignals in dem voreingestellten Standardbereich liegt:
Bestimmen eines maximalen Stärkewerts des mindestens einen Detektionssignals und eines minimalen Stärkewerts des mindestens einen Detektionssignals gemäß dem Stärkewert des mindestens einen erfassten Detektionssignals; und
wenn eine Differenz zwischen dem maximalen Stärkewert des mindestens einen Detektionssignals und dem minimalen Stärkewert des mindestens einen Detektionssignals einen voreingestellten Standardwert nicht überschreitet, Bestimmen, dass der Stärkewert jedes erfassten Detektionssignals in dem voreingestellten Standardbereich liegt.

12. Einrichtung nach Anspruch 8 oder 9, wobei die Erfassungseinheit ferner konfiguriert ist, um:
bevor der Referenzstärkewert des mindestens einen Detektionssignals gemäß dem Stärkewert des mindestens einen Detektionssignals bestimmt wird, eine Menge von Erfassungsanzahlen zusammenzuaddieren, wenn ein Detektionssignal, dessen Stärkewert nicht in einem voreingestellten Standardbereich liegt, in dem mindestens einen Detektionssignal vorhanden ist;
die Vorrichtung umfasst die Beurteilungseinheit (305), wobei die Beurteilungseinheit konfiguriert ist, um zu bestimmen, ob eine Gesamtmenge von Erfassungsanzahlen, die nach dem Hinzufügen der Menge von Erfassungsanzahlen erhalten wird, eine bestimmte Menge von Anzahlen überschreitet; und
die Erfassungseinheit ferner konfiguriert ist, um:
wenn ein Ergebnis des Bestimmens der Beurteilungseinheit ist, dass die Gesamtmenge von Erfassungsanzahlen, die nach dem Hinzufügen der Menge von Erfassungsanzahlen erhalten wird, kleiner als die festgelegte Menge von Anzahlen ist, das Erfassen von mindestens einem Detektionssignal erneut durchzuführen; oder
die zweite Bestimmungseinheit ferner konfiguriert ist, um:
wenn ein Ergebnis des Bestimmens der Beurteilungseinheit ist, dass die Gesamtmenge von Erfassungsanzahlen, die nach dem Hinzufügen der Menge von Erfassungsanzahlen erhalten wird, nicht kleiner als die festgelegte Menge von Anzahlen ist, das Bestimmen eines Referenzstärkewerts des mindestens einen Detektionssignals gemäß dem Stärkewert des mindestens einen Detektionssignals durchzuführen.

## Revendications

1. Procédé d'étalonnage de distance de détection, comprenant :
la collecte (S101) d'au moins un signal de détection ;
la détermination (S102) d'une valeur de force de l'au moins un signal de détection, dans lequel la valeur de force du signal de détection reflète une distance de détection ;
la détermination (S103) d'une valeur de force de référence de l'au moins un signal de détection en fonction de la valeur de force de l'au moins un signal de détection ;
la détermination (S104) d'un seuil d'étalonnage en fonction de la valeur de force de référence, dans lequel le seuil d'étalonnage est utilisé pour déterminer une plage d'étalonnage de la distance de détection ; et
l'étalonnage (S105) de la distance de détection en fonction du seuil d'étalonnage et d'une valeur de force d'un signal de détection collecté ultérieurement ;
**caractérisé en ce que** la détermination d'un seuil d'étalonnage en fonction du seuil d'étalonnage et d'une valeur de force comprend spécifiquement :
la détermination (S1021) que la valeur de force de référence dépasse ou non une valeur de force de référence maximum prédéfinie ; et
l'utilisation (S1022a) d'une valeur par défaut prédéfinie comme seuil d'étalonnage si la valeur de force de référence dépasse la valeur de force de référence maximum prédéfinie, dans lequel la valeur par défaut est une valeur de référence déterminée en fonction au moins d'un signal de détection stable collecté ; ou l'utilisation d'une somme de la valeur de force de référence et d'une valeur paramétrique fixe comme seuil d'étalonnage si la valeur de force de référence ne dépasse pas la valeur de force de référence maximum prédéfinie.

2. Procédé selon la revendication 1, dans lequel la détermination d'une valeur de force de référence de l'au moins un signal de détection en fonction de la valeur de force de l'au moins un signal de détection comprend spécifiquement :
l'utilisation (S1032) d'une valeur de force moyenne de l'au moins un signal de détection collecté comme valeur de force de référence de l'au moins un signal de détection.

3. Procédé selon la revendication 1 ou 2, le procédé comprenant en outre avant la détermination d'une valeur de force de référence de l'au moins un signal de détection en fonction de la valeur de force de l'au moins un signal de détection :
la détermination (S1031c) qu'une valeur de force de chaque signal de détection collecté tombe dans une plage standard prédéfinie.

4. Procédé selon la revendication 3, dans lequel la détermination qu'une valeur de force de chaque signal de détection collecté tombe dans une plage standard prédéfinie comprend spécifiquement :
la détermination (S1031b) d'une valeur de force maximum de l'au moins un signal de détection et d'une valeur de force minimum de l'au moins un signal de détection en fonction de la valeur de force de l'au moins un signal de détection collecté ; et
si une différence entre la valeur de force maximum de l'au moins un signal de détection et la valeur de force minimum de l'au moins un signal de détection ne dépasse pas une valeur standard prédéfinie, la détermination (S1031c) que la valeur de force de chaque signal de détection collecté tombe dans la plage standard prédéfinie.

5. Procédé selon la revendication 1 ou 2, le procédé comprenant en outre avant la détermination d'une valeur de force de référence de l'au moins un signal de détection en fonction de la valeur de force de l'au moins un signal de détection :
l'ajout (S1032a) d'une quantité de temps de collecte quand un signal de détection dont la valeur de force ne tombe pas dans une plage standard prédéfinie existe dans l'au moins un signal de détection ;
la détermination (S1032b) qu'une quantité totale de temps de collecte obtenue après l'ajout de la quantité de temps de collecte dépasse ou non une quantité de temps spécifiée ; et
si la quantité totale de temps de collecte obtenue après l'ajout de la quantité de temps de collecte est inférieure à la quantité de temps spécifiée, l'exécution à nouveau (S 1032c) de la collecte d'au moins un signal de détection ; ou si la quantité totale de temps de collecte obtenue après l'ajout de la quantité de temps de collecte n'est pas inférieure à la quantité de temps spécifiée, l'exécution (S1032d) de la détermination d'une valeur de force de référence de l'au moins un signal de détection en fonction de la valeur de force de l'au moins un signal de détection.

6. Procédé selon l'une quelconque des revendications 1 à 5, le procédé comprenant en outre après la détermination d'un seuil d'étalonnage :
si une différence entre la valeur de force du signal de détection collecté ultérieurement et la valeur de force de référence n'est pas inférieure à la valeur standard prédéfinie, l'exécution à nouveau de la collecte d'au moins un signal de détection, de la détermination d'une valeur de force, dde la détermination d'une valeur de force de référence, et de la détermination d'un seuil d'étalonnage.

7. Procédé selon l'une quelconque des revendications 1 à 6, dans lequel le signal de détection comprend un signal infrarouge ou un signal ultrasonore.

8. Appareil d'étalonnage de distance de détection, comprenant :
une unité de collecte (301), configurée pour collecter au moins un signal de détection ;
une première unité de détermination (302), configurée pour déterminer une valeur de force de l'au moins un signal de détection collecté par l'unité de collecte, dans lequel la valeur de force du signal de détection reflète une longueur d'une distance de détection ;
une seconde unité de détermination (303), configurée pour : déterminer une valeur de force de référence de l'au moins un signal de détection en fonction de la valeur de force qui est de l'au moins un signal de détection et est déterminée par la première unité de détermination ; et déterminer un seuil d'étalonnage en fonction de la valeur de force de référence, dans lequel le seuil d'étalonnage est utilisé pour déterminer une plage d'étalonnage de la distance de détection ; et
une unité d'étalonnage (304), configurée pour étalonner la distance de détection en fonction du seuil d'étalonnage déterminé par la seconde unité de détermination et d'une valeur de force d'un signal de détection collecté ultérieurement ;
**caractérisé en ce que** l'appareil comprend en outre une unité de jugement, dans lequel :
l'unité de jugement est configurée pour déterminer que la valeur de force de référence dépasse une valeur de force de référence maximum prédéfinie ; et
la seconde unité de détermination est configurée spécifiquement pour déterminer le seuil d'étalonnage en fonction de la valeur de force de référence de la manière suivante :
en utilisant une valeur par défaut comme seuil d'étalonnage si un résultat de la détermination de l'unité de jugement est que la valeur de force de référence dépasse la valeur de force de référence maximum prédéfinie, dans lequel la valeur par défaut est une valeur de référence déterminée en fonction d'au moins un signal de détection stable collecté ; ou en utilisant une somme de la valeur de force de référence et d'une valeur paramétrique fixe comme seuil d'étalonnage si un résultat de la détermination de l'unité de jugement est que la valeur de force de référence ne dépasse pas la valeur de force de référence maximum prédéfinie.

9. Appareil selon la revendication 8, dans lequel la seconde unité de détermination est configurée spécifiquement pour déterminer la valeur de force de référence de l'au moins un signal de détection en fonction de la valeur de force de l'au moins un signal de détection de la manière suivante :
en utilisant une valeur de force moyenne de l'au moins un signal de détection collecté comme valeur de force de référence de l'au moins un signal de détection.

10. Appareil selon la revendication 8 ou 9, dans lequel la seconde unité de détermination est configurée en outre pour :
avant de déterminer la valeur de force de référence de l'au moins un signal de détection en fonction de la valeur de force de l'au moins un signal de détection, déterminer qu'une valeur de force de chaque signal de détection collecté tombe dans une plage standard prédéfinie.

11. Appareil selon la revendication 10, dans lequel la seconde unité de détermination est configurée spécifiquement pour déterminer, de la manière suivante, que la valeur de force de chaque signal de détection collecté tombe dans la plage standard prédéfinie :
en déterminant une valeur de force maximum de l'au moins un signal de détection et une valeur de force minimum de l'au moins un signal de détection en fonction de la valeur de force de l'au moins un signal de détection collecté ; et
si une différence entre la valeur de force maximum de l'au moins un signal de détection et la valeur de force minimum de l'au moins un signal de détection ne dépasse pas une valeur standard prédéfinie, en déterminant que la valeur de force de chaque signal de détection collecté tombe dans la plage standard prédéfinie.

12. Appareil selon la revendication 8 ou 9, dans lequel l'unité de collecte est configurée en outre pour :
avant la détection de la valeur de force de référence de l'au moins un signal de détection en fonction de la valeur de force de l'au moins un signal de détection, ajouter une quantité de temps de collecte quand un signal de détection dont la valeur de force ne tombe pas dans une plage standard prédéfinie existe dans l'au moins un signal de détection ;
l'appareil comprend l'unité de jugement (305), dans lequel
l'unité de jugement est configurée pour déterminer qu'une quantité totale de temps de collecte obtenue après l'ajout de la quantité de temps de collecte dépasse ou non une quantité de temps spécifiée ; et
l'unité de collecte est configurée en outre pour :
si un résultat de la détermination de l'unité de jugement est que la quantité totale de temps de collecte obtenue après l'ajout de la quantité de temps de collecte est inférieure à la quantité de temps spécifiée, exécuter à nouveau la collecte d'au moins un signal de détection ; ou
la seconde unité de détermination est configurée en outre pour :
si un résultat de la détermination de l'unité de jugement est que la quantité totale de temps de collecte obtenue après l'ajout de la quantité de temps de collecte n'est pas inférieure à la quantité de temps spécifiée, exécuter la détermination d'une valeur de force de référence de l'au moins un signal de détection en fonction de la valeur de force de l'au moins un signal de détection.
